# EUROPÄISCHE PATENTANMELDUNG

(11) **EP 3 868 906 A1**
(43) Veröffentlichungstag der Anmeldung: **25.08.2021**
(21) Anmeldenummer: 20157810.1
(22) Anmeldetag: 18.02.2020
(51) Int. Cl.: C22B 4/00, C22B 11/00, C22B 11/02

(54) **VERFAHREN ZUR HERSTELLUNG EINER EDELMETALL UMFASSENDEN SAMMLERLEGIERUNG ODER VON REINEM SILBER**

(71) Anmelder: Heraeus Deutschland GmbH & Co. KG, 63450 Hanau (DE)
(72) Erfinder: RÖHLICH, Christoph, 63450 Hanau (DE); BAUER-SIEBENLIST, Bernhard, 63450 Hanau (DE); WINKLER, Holger, 63450 Hanau (DE); MICHAELIS, Diana, 52056 Aachen (DE); FRIEDRICH, Karl Bernhard, 52056 Aachen (DE)
(74) Vertreter: Heraeus IP

(57) **Zusammenfassung**

Verfahren zur Herstellung einer insgesamt 25 bis 100 Gew.-% Edelmetall umfassenden Sammlerlegierung umfassend 0 bis <97 Gew.-% des Edelmetalls Silber, 0 bis 75 Gew.-% mindestens eines Edelmetalls ausgewählt aus Gold, Platin, Rhodium und Palladium, sowie 0 bis 75 Gew.-% mindestens eines Nichtedelmetalls ausgewählt aus Kupfer, Eisen, Zinn und Nickel, oder zur Herstellung von reinem Silber umfassend die Schritte:
(1) Bereitstellen eines insgesamt 4 bis 30 Gew.-% Edelmetall umfassenden Edelmetallgekrätzes umfassend 0 bis 30 Gew.-% des Edelmetalls Silber, 0 bis 10 Gew.-% mindestens eines Edelmetalls ausgewählt aus Gold, Platin, Rhodium und Palladium, 0 bis 10 Gew.-% mindestens eines Nichtedelmetalls ausgewählt aus Kupfer, Eisen, Zinn und Nickel, und 70 bis 96 Gew.-% mindestens eines refraktären anorganischen Materials,
(2) Bereitstellen eines Flussmittels, welches beim gemeinsamen Schmelzen mit dem refraktären anorganischen Material aus dem in Schritt (1) bereitgestellten Edelmetallgekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag,
(3) gemeinsames Schmelzen der in den Schritten (1) und (2) bereitgestellten Materialien bei einer Temperatur im Bereich von 1300 bis 1600°C unter Bildung einer mindestens zwei übereinander angeordnete Phasen von unterschiedlicher Dichte umfassenden Schmelze, und
(4) Trennen der oberen Phase und der unteren Phase, wobei die obere Phase eine Schlackephase bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen und die untere Phase die Sammlerlegierung respektive reines Silber umfasst, wobei keines der im Verfahren verwendeten Materialien Kupferoxid umfasst, ausgenommen gegebenenfalls als äußere Kupferoxidschicht auf metallischem Kupfer vorhandenes Kupferoxid.

## Beschreibung

Die Erfindung betrifft ein Verfahren zur Herstellung einer Edelmetall umfassenden Sammlerlegierung oder von reinem Silber.

Der hierin verwendete Begriff "Edelmetall" umfasst allgemein die Elemente Silber (Ag), Gold (Au), Platin (Pt), Palladium (Pd), Rhodium (Rh), Osmium (Os), Iridium (Ir), Ruthenium (Ru) und Rhenium (Re).

Der hierin verwendete Begriff "reines Silber" bezeichnet Silber mit einer Reinheit von mindestens 97 Gew.-% (Gewichts-%) und bildet damit eine Abgrenzung gegenüber Legierungen mit einem Silberanteil von <97 Gew.-%.

Die Herstellung von Edelmetall umfassenden Sammlerlegierungen aus Edelmetall enthaltenden Abfällen mittels schmelzmetallurgischer Verfahren ist bekannt. Dabei entsteht einerseits eine Edelmetall umfassende Sammlerlegierung und andererseits eine Schlacke, vgl. beispielsweise DE 38 16 697 C1 und DE 32 03 826 A1. Dabei können allerdings noch nennenswerte Edelmetallanteile von der Schlacke umfasst sein, die ein Verwerfen der Schlacke aus wirtschaftlicher Sicht aber auch aus Gründen der Ressourcenschonung verbieten und eine mehr oder minder aufwändige Weiterbearbeitung der Schlacke erfordern können.

Aufgabe der vorliegenden Erfindung war es, ein schmelzmetallurgisches Verfahren zur Aufarbeitung bestimmter Edelmetallgekrätze mit möglichst geringen Verlusten von Edelmetall in die Schlacke zu entwickeln.

Der hierin verwendete Begriff "Edelmetallgekrätz" (englisch "precious metal sweeps", "precious metal dross") bedeutet edelmetallhaltige Rückstände, insbesondere Sammelgüter (Reste, Stäube, Schleifstäube, Polierstäube) aus der Edelmetallverarbeitung (Schmuckindustrie, Juwelierbetriebe, Dentalabfälle), aber auch beispielsweise Rückstände aus der Erzaufbereitung, Fällungsrückstände und Aschen. Bei einem Edelmetallgekrätz, welches Silber als alleiniges Edelmetall umfasst, handelt es sich um ein Silbergekrätz.

Die vorliegende Erfindung löst die Aufgabenstellung durch Bereitstellung eines Verfahrens entweder zur Herstellung einer insgesamt 25 bis 100 Gew.-% Edelmetall umfassenden Sammlerlegierung (nachfolgend der Kürze halber auch einfach als "Sammlerlegierung" bezeichnet) umfassend 0 bis <97 Gew.-% des Edelmetalls Silber, 0 bis 75 Gew.-% mindestens eines Edelmetalls ausgewählt aus der Gruppe bestehend aus Gold, Platin, Rhodium und Palladium, sowie 0 bis 75 Gew.-% mindestens eines Nichtedelmetalls ausgewählt aus der Gruppe bestehend aus Kupfer, Eisen, Zinn und Nickel, oder zur Herstellung von reinem Silber. Das Verfahren umfasst die Schritte:
(1) Bereitstellen eines insgesamt 4 bis 30 Gew.-% Edelmetall umfassenden Edelmetallgekrätzes umfassend oder bestehend aus 0 bis 30 Gew.-% des Edelmetalls Silber, 0 bis 10 Gew.-% mindestens eines Edelmetalls ausgewählt aus der Gruppe bestehend aus Gold, Platin, Rhodium und Palladium, 0 bis 10 Gew.-% mindestens eines Nichtedelmetalls ausgewählt aus der Gruppe bestehend aus Kupfer, Eisen, Zinn und Nickel, und 70 bis 96 Gew.-% mindestens eines refraktären anorganischen Materials,
(2) Bereitstellen eines Flussmittels, welches beim gemeinsamen Schmelzen mit dem refraktären anorganischen Material aus dem in Schritt (1) bereitgestellten Edelmetallgekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag,
(3) gemeinsames Schmelzen der in den Schritten (1) und (2) bereitgestellten Materialien bei einer Temperatur im Bereich von 1300 bis 1600°C unter Bildung einer mindestens zwei übereinander angeordnete Phasen von unterschiedlicher Dichte umfassenden Schmelze, und
(4) Trennen der oberen Phase niedriger Dichte und der unteren Phase hoher Dichte,
   wobei die obere Phase eine Schlackephase bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen und die untere Phase die Sammlerlegierung respektive reines Silber umfasst oder ist,
   wobei keines der im Verfahren verwendeten Materialien Kupferoxid (CuO und/oder Cu₂O) umfasst, ausgenommen gegebenenfalls als äußere Kupferoxidschicht auf metallischem Kupfer vorhandenes Kupferoxid.

Keines der im erfindungsgemäßen Verfahren verwendeten Materialien umfasst Kupferoxid in Substanz. In diesem konkreten Zusammenhang umfasst das in "verwendete Materialien" benutzte Wort "verwendet" Handlungen wie "bereitgestellt, zugegeben, zugesetzt". "Gegebenenfalls als äußere Kupferoxidschicht auf metallischem Kupfer vorhandenes Kupferoxid" bezieht sich auf den nur bei der ersten Ausführungsform des erfindungsgemäßen Verfahrens möglichen Fall, dass metallisches Kupfer als Bestandteil im in Schritt (1) bereitgestellten Edelmetallgekrätz vorliegt und/oder als solches im Verfahren als Zusatz verwendet wird, wobei das metallische Kupfer gegebenenfalls eine äußere Kupferoxidschicht aufweist. Bei der zweiten Ausführungsform des erfindungsgemäßen Verfahrens liegt kein metallisches Kupfer als Bestandteil im in Schritt (1) bereitgestellten Silbergekrätz vor und es wird auch an keiner Stelle im Verfahren metallisches Kupfer als Zusatz verwendet.

Hierin werden die Begriffe "refraktäres anorganisches Material" und "refraktäre anorganische Verbindungen" verwendet. Bei einem refraktären anorganischen Material handelt es sich um nichtmetallisches und gegenüber hohen Temperaturen beispielsweise im Bereich von 900 bis 2500 °C widerstandsfähiges Material, d.h. sich dabei physikalisch und chemisch nicht oder praktisch nicht veränderndes Material oder um thermisch zersetzliche Vorläufer solcherart widerstandsfähiger Materialien wie beispielsweise Sulfate oder Carbonate. Beispielsweise kann es sich um keramisches Refraktärmaterial handeln. Beispiele für refraktäre anorganische Materialien umfassen anorganische Verbindungen wie beispielsweise Oxide, Hydroxide und Oxidhydrate der Elemente Aluminium, Titan, Silizium, Magnesium, Zinn, Zink, Zirkonium, Eisen, Nickel und Calcium; Silikate, Alumosilikate, Titanate und andere Mischoxide; Calciumcarbonat; Natriumcarbonat; Calciumsulfat; Bariumsulfat; Calciumphosphat; Siliziumcarbid und Siliziumnitrid. Die refraktären anorganischen Materialien als solche sind von Hause aus edelmetallfrei. Die im erfindungsgemäßen Verfahren verwendeten oder zugesetzten refraktären anorganischen Materialien oder refraktären anorganischen Verbindungen umfassen kein Kupferoxid; dies gilt insbesondere auch mit Blick auf die als Bestandteil von in den Verfahrensschritten (1) und (2) bereitgestellten Materialien (Gekrätze und Flussmittel) umfassten refraktären anorganischen Materialien oder Verbindungen.

Den hierin verwendeten Begriff "edelmetallfrei" versteht der Fachmann als edelmetallfrei bis auf einen für ein betreffendes Material technisch praktisch unvermeidbaren, niedrigen Edelmetallgehalt beispielsweise im Bereich von >0 bis 25 Gew.-ppm (Gewichts-ppm).

Das erfindungsgemäße Verfahren findet insbesondere statt im Rahmen eines schmelzmetallurgischen Verfahrens zur Aufarbeitung eines Edelmetall- oder Silbergekrätzes. "Schmelzmetallurgische Aufarbeitung" bezieht sich dabei auf die Rückgewinnung von Edelmetall respektive Silber auf schmelzmetallurgischem Wege. Alternativ kann die Erfindung daher auch verstanden werden als ein die Schritte (1) bis (4) umfassendes Verfahren zur schmelzmetallurgischen Aufarbeitung des insgesamt 4 bis 30 Gew.-% Edelmetall umfassenden Edelmetallgekrätzes.

In einer ersten Ausführungsform handelt es sich um ein Verfahren zur Herstellung einer insgesamt 25 bis 100 Gew.-% Edelmetall umfassenden Sammlerlegierung umfassend 0 bis <97 Gew.-% des Edelmetalls Silber, 0 bis 75 Gew.-% mindestens eines Edelmetalls ausgewählt aus der Gruppe bestehend aus Gold, Platin, Rhodium und Palladium, sowie 0 bis 75 Gew.-% mindestens eines Nichtedelmetalls ausgewählt aus der Gruppe bestehend aus Kupfer, Eisen, Zinn und Nickel, umfassend die Schritte:
(1) Bereitstellen eines insgesamt 4 bis 30 Gew.-% Edelmetall umfassenden Edelmetallgekrätzes umfassend oder bestehend aus 0 bis 30 Gew.-% des Edelmetalls Silber, 0 bis 10 Gew.-% mindestens eines Edelmetalls ausgewählt aus der Gruppe bestehend aus Gold, Platin, Rhodium und Palladium, 0 bis 10 Gew.-% mindestens eines Nichtedelmetalls ausgewählt aus der Gruppe bestehend aus Kupfer, Eisen, Zinn und Nickel, und 70 bis 96 Gew.-% mindestens eines refraktären anorganischen Materials,
(2) Bereitstellen eines Flussmittels, welches beim gemeinsamen Schmelzen mit dem refraktären anorganischen Material aus dem in Schritt (1) bereitgestellten Edelmetallgekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag,
(3) gemeinsames Schmelzen der in den Schritten (1) und (2) bereitgestellten Materialien bei einer Temperatur im Bereich von 1300 bis 1600°C unter Bildung einer mindestens zwei übereinander angeordnete Phasen von unterschiedlicher Dichte umfassenden Schmelze, und
(4) Trennen der oberen Phase niedriger Dichte und der unteren Phase hoher Dichte,
   wobei die obere Phase eine Schlackephase bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen und die untere Phase die Sammlerlegierung umfasst oder ist, wobei keines der im Verfahren verwendeten Materialien Kupferoxid umfasst, ausgenommen gegebenenfalls als äußere Kupferoxidschicht auf metallischem Kupfer vorhandenes Kupferoxid.

Schritt (3) kann bei dieser ersten Ausführungsform unter Zusatz von reinem Kupfer und/oder reinem Silber verlaufen.

Der hierin verwendete Begriff "reines Kupfer" bezeichnet metallisches Kupfer mit einer Reinheit von mindestens 97 Gew.-% und bildet damit eine Abgrenzung gegenüber Legierungen mit einem Kupferanteil von <97 Gew.-%. Das reine Kupfer kann eine äußere Kupferoxidschicht aufweisen.

In einer zweiten Ausführungsform des erfindungsgemäßen Verfahrens handelt es sich um ein Verfahren zur Herstellung von reinem Silber und das Edelmetallgekrätz ist ein Silbergekrätz. Das Verfahren umfasst dann die Schritte:
(1) Bereitstellen eines aus 4 bis 30 Gew.-% Silber und 70 bis 96 Gew.-% mindestens eines refraktären anorganischen Materials bestehenden Silbergekrätzes,
(2) Bereitstellen eines Flussmittels, welches beim gemeinsamen Schmelzen mit dem refraktären anorganischen Material aus dem in Schritt (1) bereitgestellten Silbergekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag,
(3) gemeinsames Schmelzen der in den Schritten (1) und (2) bereitgestellten Materialien bei einer Temperatur im Bereich von 1300 bis 1600°C unter Bildung einer mindestens zwei übereinander angeordnete Phasen von unterschiedlicher Dichte umfassenden Schmelze, und
(4) Trennen der oberen Phase niedriger Dichte und der unteren Phase hoher Dichte,
   wobei die obere Phase eine Schlackephase bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen und die untere Phase reines Silber umfasst oder ist, wobei keines der im Verfahren verwendeten Materialien Kupferoxid umfasst.

Schritt (3) kann bei dieser zweiten Ausführungsform unter Zusatz von reinem Silber alleine, d.h. ohne Zusatz anderer Metalle als reinen Silbers, verlaufen.

Beide Ausführungsformen des erfindungsgemäßen Verfahrens gehorchen der gleichen in Schritt (2) dargelegten Auswahlregel betreffend das auszuwählende Flussmittel.

Im erfindungsgemäßen Verfahren wird während Schritt (3) eine Edelmetall umfassende Sammlerlegierung (erste Ausführungsform des Verfahrens) oder reines Silber (zweite Ausführungsform des Verfahrens) gebildet.

Die Sammlerlegierung umfasst insgesamt 25 bis 100 Gew.-% Edelmetall und dabei 0 bis <97 Gew.-% des Edelmetalls Silber, 0 bis 75 Gew.-% mindestens eines Edelmetalls ausgewählt aus der Gruppe bestehend aus Gold, Platin, Rhodium und Palladium, sowie 0 bis 75 Gew.-% mindestens eines Nichtedelmetalls ausgewählt aus der Gruppe bestehend aus Kupfer, Eisen, Zinn und Nickel; sie kann dabei ferner beispielsweise insgesamt bis zu 5 Gew.-% eines oder mehrerer anderer Elemente (von Silber, Gold, Platin, Rhodium, Palladium, Kupfer, Eisen, Zinn und Nickel verschiedene Elemente), wie beispielsweise Blei, Zink und Chrom umfassen. Die Sammlerlegierung kann dementsprechend beispielsweise nur Edelmetall, also entweder mindestens zwei Edelmetalle ausgewählt aus Gold, Platin, Rhodium und Palladium, oder Silber gemeinsam mit einem oder mehreren Edelmetallen ausgewählt aus Gold, Platin, Rhodium und Palladium umfassen; sie kann aber auch mindestens eines der Nichtedelmetalle ausgewählt aus Kupfer, Eisen, Zinn und Nickel (i) gemeinsam mit Silber oder (ii) gemeinsam mit einem oder mehreren Edelmetallen ausgewählt aus Gold, Platin, Rhodium und Palladium oder (iii) gemeinsam mit Silber und einem oder mehreren Edelmetallen ausgewählt aus Gold, Platin, Rhodium und Palladium umfassen. Die Sammlerlegierung kann bei jeder der vorerwähnten Varianten (i) - (iii) auch andere Elemente als Silber, Gold, Platin, Rhodium, Palladium, Kupfer, Eisen, Zinn und Nickel umfassen.

In einer bevorzugten Ausführungsform umfasst die Sammlerlegierung insgesamt 40 bis 100 Gew.-% Edelmetall.

Wird im erfindungsgemäßen Verfahren gemäß seiner ersten Ausführungsform eine Sammlerlegierung hergestellt, so kann ein etwaiger Silberanteil dem Edelmetallgekrätz und/oder gegebenenfalls während Schritt (3) zugesetztem reinem Silber, ein etwaiger Anteil von Gold, Platin, Rhodium, Palladium, Eisen, Zinn und/oder Nickel dem Edelmetallgekrätz und ein etwaiger Kupferanteil dem Edelmetallgekrätz und/oder gegebenenfalls während Schritt (3) zugesetztem reinem Kupfer entstammen.

Wird im erfindungsgemäßen Verfahren gemäß seiner zweiten Ausführungsform reines Silber hergestellt, so entstammt das Silber dem Silbergekrätz und gegebenenfalls während Schritt (3) zugesetztem reinem Silber.

In Schritt (1) des erfindungsgemäßen Verfahrens gemäß seiner ersten Ausführungsform wird ein insgesamt 4 bis 30 Gew.-% Edelmetall umfassendes Edelmetallgekrätz umfassend oder bestehend aus 0 bis 30 Gew.-% des Edelmetalls Silber, 0 bis 10 Gew.-% mindestens eines Edelmetalls ausgewählt aus der Gruppe bestehend aus Gold, Platin, Rhodium und Palladium, 0 bis 10 Gew.-% mindestens eines Nichtedelmetalls ausgewählt aus der Gruppe bestehend aus Kupfer, Eisen, Zinn und Nickel, und 70 bis 96 Gew.-% mindestens eines refraktären anorganischen Materials bereitgestellt. Der Edelmetallanteil liegt dabei im Wesentlichen (>95 %) oder vollständig als Metall oder als Bestandteil einer Metalllegierung vor. Nicht metallisch vorliegendes Edelmetall liegt im Allgemeinen als Oxid vor und zählt nicht zum refraktären anorganischen Material. Das Edelmetallgekrätz kann ferner geringe Anteile, beispielsweise insgesamt bis zu 5 Gew.-% eines oder mehrerer anderer Elemente (von Silber, Gold, Platin, Rhodium, Palladium, Kupfer, Eisen, Zinn und Nickel verschiedene Elemente) wie beispielsweise Blei, Zink und Chrom umfassen. Eventuell vorliegende organische Verunreinigungen wie beispielsweise organische Verbindungen und/oder Kohlenstoff können falls gewünscht vor Durchführung von Schritt (3) entfernt werden.

Bevorzugt umfasst oder besteht das Edelmetallgekrätz aus 3,5 bis 29,5 Gew.-% des Edelmetalls Silber, 0,5 bis 10 Gew.-% mindestens eines Edelmetalls ausgewählt aus der Gruppe bestehend aus Gold, Platin, Rhodium und Palladium, 0 bis 10 Gew.-% mindestens eines Nichtedelmetalls ausgewählt aus der Gruppe bestehend aus Kupfer, Eisen, Zinn und Nickel, und 70 bis 96 Gew.-% mindestens eines refraktären anorganischen Materials.

Bezüglich Art des und Beispielen für das refraktäre anorganische Material wird auf das schon Vorerwähnte verwiesen.

In Schritt (1) des erfindungsgemäßen Verfahrens gemäß seiner zweiten Ausführungsform wird ein Silbergekrätz bestehend aus 4 bis 30 Gew.-% Silber und 70 bis 96 Gew.-% mindestens eines refraktären anorganischen Materials bereitgestellt. Der Silberanteil liegt dabei im Wesentlichen (>95 %) oder vollständig als Metall vor. Nicht metallisch vorliegendes Silber liegt im Allgemeinen als Silberoxid vor und zählt nicht zum refraktären anorganischen Material.

Bezüglich Art des und Beispielen für das refraktäre anorganische Material wird auch hier auf das schon Vorerwähnte verwiesen.

In Schritt (2) des erfindungsgemäßen Verfahrens wird ein Flussmittel bereitgestellt, welches beim gemeinsamen Schmelzen mit dem refraktären anorganischen Material aus dem in Schritt (1) bereitgestellten Edelmetall- respektive Silbergekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag. Konkret bedeutet dies, dass das Flussmittel während Schritt (3) gemeinsam mit dem refraktären anorganischen Material aus dem in Schritt (1) bereitgestellten Edelmetallrespektive Silbergekrätz eine geschmolzene Schlacke besagter Zusammensetzung als obere Schmelzphase mit niedriger Dichte zu bilden vermag.

Für den Fachmann ist es ein Leichtes, das Flussmittel unter Beachtung der hierin offenbarten Auswahlregel auszuwählen. Dazu muss er sich lediglich Kenntnis der absoluten Menge und Zusammensetzung des Edelmetall- oder Silbergekrätzes respektive des davon umfassten refraktären anorganischen Materials verschaffen, welches in einem konkreten Ansatz (einem Ansatz definierter Größe) gemäß dem erfindungsgemäßen Verfahren schmelzmetallurgisch aufgearbeitet werden soll. Bei Anwendung fachüblicher Mischungsrechnung ist es dann möglich, eine geeignete Menge eines Flussmittels geeigneter Zusammensetzung auszuwählen. Dies sei an einem Beispiel erläutert: Es sollen beispielsweise 100 kg Edelmetallgekrätz mit der Zusammensetzung 45,2 Gew.-% Aluminiumoxid, 5,7 Gew.-% Calciumoxid, 37,2 Gew.-% Siliziumdioxid, insgesamt 6,6 Gew.-% andere Oxide (Titan-, Eisen- und Zirkonoxid) und 5,2 Gew.-% Edelmetalle (Ag, Au, Pt) schmelzmetallurgisch bearbeitet werden. Durch Verwendung von 163 kg Flussmittel beispielsweise mit der Zusammensetzung 100 kg Calciumoxid und 63 kg Siliziumdioxid gelangt man im erfindungsgemäßen Verfahren zu einer Schlacke zusammengesetzt aus 40,9 Gew.-% Calciumoxid, 39,0 Gew.-% Siliziumdioxid, 17,5 Gew.-% Aluminiumoxid und 2,6 Gew.-% der anderen Oxide.

Die in den Schritten (1) und (2) bereitgestellten Materialien, d.h. das Edelmetall- oder Silbergekrätz und/oder das Flussmittel können vor dem gemeinsamen Schmelzen in Schritt (3) zweckmäßigerweise zerkleinert, beispielsweise zermahlen werden. Dabei wird der Fachmann eine gute Handhabbarkeit beachten und beispielsweise eine zu Staubproblemen führende Zerkleinerung vermeiden.

In Schritt (3) des erfindungsgemäßen Verfahrens gemäß seiner ersten Ausführungsform werden die in den Schritten (1) und (2) bereitgestellten Materialien gegebenenfalls unter Zusatz von reinem Kupfer und/oder reinem Silber gemeinsam bei einer Temperatur im Bereich von 1300 bis 1600°C geschmolzen. In Schritt (3) des erfindungsgemäßen Verfahrens gemäß seiner zweiten Ausführungsform hingegen werden die in den Schritten (1) und (2) bereitgestellten Materialien gegebenenfalls unter Zusatz von reinem Silber, keinesfalls jedoch unter Zusatz von Kupfer oder anderen Metallen, gemeinsam bei einer Temperatur im Bereich von 1300 bis 1600°C geschmolzen. Bei beiden Ausführungsformen bildet sich eine Schmelze aus zwei oder mehr (in vertikaler Richtung) übereinander angeordneten Phasen unterschiedlicher Dichte. Dabei umfassen die übereinander angeordneten Phasen eine obere Phase umfassend oder bestehend aus der wie schon vorerwähnt zusammengesetzten geschmolzenen Schlacke und eine untere Phase umfassend oder bestehend aus der wie schon vorerwähnt zusammengesetzten geschmolzenen Sammlerlegierung (erste Ausführungsform des erfindungsgemäßen Verfahrens) respektive umfassend oder bestehend aus geschmolzenem reinem Silber (zweite Ausführungsform des erfindungsgemäßen Verfahrens). Bevorzugt wird im erfindungsgemäßen Verfahren so gearbeitet, dass sich ein zu 100 Gewichtsteilen ergänzendes Verhältnis der oberen und unteren Phase beispielsweise im Bereich von 5 bis 60 Gewichtsteilen, bevorzugt 10 bis 50 Gewichtsteilen Sammlerlegierung respektive reinem Silber : 40 bis 95 Gewichtsteilen, bevorzugt 50 bis 90 Gewichtsteilen Schlacke ausbildet.

Falls während Schritt (3) reines Kupfer und/oder reines Silber respektive reines Silber alleine zugesetzt wird, wird solches zum Bestandteil der sich bildenden unteren Phase.

Während Schritt (3) kann gegebenenfalls Reduktionsmittel wie beispielsweise Propan, eher jedoch festes Reduktionsmittel in Form von Koks, Graphit und/oder Kunststoff (Kunststoffreste, Kunststoffrecyclat) zugeführt oder zugesetzt werden. Dies kann insbesondere dann zweckmäßig sein, falls das in Schritt (1) bereitgestellte Material Edelmetalloxid(e) und/oder von Kupferoxid verschiedenes oder verschiedene Nichtedelmetalloxide wie beispielsweise Zinnoxid umfasst. Metalloxide können so zum Metall reduziert und zum Bestandteil der unteren Phase werden.

Während des Schmelzvorgangs des Schrittes (3) wird das Edelmetall- respektive das Silbergekrätz in seine Bestandteile aufgetrennt, d.h. in Edelmetall respektive Silber, gegebenenfalls vom Gekrätz umfasstes Nichtedelmetall und das refraktäre anorganische Material.

Wird im erfindungsgemäßen Verfahren gemäß der ersten Ausführungsform eine Sammlerlegierung hergestellt, so sammelt sich diese aufgrund der hohen beispielsweise im Bereich von 10 bis 18 g/cm³ liegenden Dichte im unteren Bereich des Schmelzofens. Der Edelmetallanteil der Sammlerlegierung ist nicht zwingend, im Allgemeinen jedoch höher als im Edelmetallgekrätz und ermöglicht im Anschluss eine Darstellung des oder der Edelmetalle als Metall oder als Edelmetallverbindung nach entsprechender Aufarbeitung der Sammlerlegierung. Wird im erfindungsgemäßen Verfahren gemäß der zweiten Ausführungsform reines Silber hergestellt, so sammelt sich auch dieses aufgrund seiner hohen Dichte im unteren Bereich des Schmelzofens.

Das refraktäre anorganische Material vermischt sich mit dem in Schritt (2) bereitgestellten Flussmittel unter Bildung besagter sich im oberen Bereich des Schmelzofens ansammelnder geschmolzener Schlacke mit einer niedrigeren beispielsweise im Bereich von 2,5 bis 4 g/cm³ liegenden Dichte.

Um Missverständnisse zu vermeiden, die hierin gemachten Dichteangaben beziehen sich auf den jeweiligen Feststoff bei 20°C.

Im Ergebnis schwimmt die geschmolzene Schlacke oben und die ebenfalls geschmolzene Sammlerlegierung oder das geschmolzene reine Silber sammelt sich unten, d.h. es bildet sich ein flüssiges System umfassend zumindest diese beiden übereinander angeordneten Schmelzphasen.

Im Wesentlichen ist die geschmolzene Schlacke das Ergebnis des Zusammenschmelzens des refraktären anorganischen Materials aus dem Edelmetall- oder Silbergekrätz mit dem in Schritt (2) bereitgestellten Flussmittel. Die geschmolzene Schlacke kann dabei eine chemisch unveränderte Mischung besagter sie bildender Substanzen sein oder letztere können eine chemische Veränderung erfahren haben.

Der Schmelzvorgang kann in einem üblichen beispielsweise gasbefeuerten Schmelzofen durchgeführt werden. In einer zweckmäßigen Ausführungsform handelt es sich um einen dreh- und/oder kippbaren Schmelzofen, beispielsweise um einen Kurztrommelofen. Im Allgemeinen wird unter reduzierender oder inerter Ofenatmosphäre gearbeitet.

Es ist möglich, die in den Schritten (1) und (2) bereitgestellten Materialien zu mischen und dann portionsweise oder separat portionsweise, beispielsweise abwechselnd portionsweise in den heißen Schmelzofen zu geben und aufzuschmelzen. Gegebenenfalls zuzusetzendes reines Kupfer und/oder reines Silber respektive reines Silber alleine kann beispielsweise währenddessen oder danach portionsweise zur Schmelze gegeben werden. Portionsweise Zugabe bedeutet, dass man die Portionsgröße und Zugabefrequenz am Fortschritt des Schmelzprozesses orientiert, sodass die Zugabe in die Schmelze hinein erfolgt, um so einen guten Wärmeübergang ins Schmelzgut zu gewährleisten.

Wesentlich für das Gelingen von Schritt (3) ist insbesondere die richtige Wahl des Flussmittels in Schritt (2). Gelingen von Schritt (3) bedeutet, dass in dessen Verlauf eine Schlacke mit nur geringem Edelmetall- respektive Silberanteil gebildet wird, mit anderen Worten, dass sich das vom Edelmetallgekrätz umfasste Edelmetall in der während Schritt (3) gebildeten unteren Sammlerlegierungsphase respektive das vom Silbergekrätz umfasste Silber in der während Schritt (3) gebildeten unteren Phase aus reinem Silber jeweils möglichst quantitativ wiederfindet. Die richtige Wahl des Flussmittels bezieht sich auf Art als auch Menge des Flussmittels, also die Gesamtmenge an Flussmittel relativ zur Menge an Edelmetall- respektive Silbergekrätz und auf die Zusammensetzung des Flussmittels an sich nach Art und Menge seiner Bestandteile. Mit anderen Worten, die Beachtung der Auswahlregel, dass das Bereitstellen eines Flussmittels, welches beim gemeinsamen Schmelzen mit dem refraktären anorganischen Material aus dem in Schritt (1) bereitgestellten Edelmetall- respektive Silbergekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag, ist eine wesentliche Voraussetzung für das Gelingen von Schritt (3). Es wird angenommen, dass eine derartige geschmolzene Schlacke bei der während Schritt (3) vorherrschenden Temperatur eine geeignet niedrige Viskosität aufweist für ein Verlassen von geschmolzenem Edelmetall respektive Silber aus der Schlackephase in Richtung der unten befindlichen Schmelzphase. So liegt die mittels der Simulationssoftware FactSage© berechnete Viskosität einer wie vorerwähnt zusammengesetzten Schlacke im während Schritt (3) vorherrschenden Temperaturbereich beispielsweise im Bereich von lediglich 0,1 bis 5 Pa·s.

Nach Abschluss von Schritt (3), d.h. nachdem sich das Zwei- oder Mehrphasensystem gebildet hat, wird Schritt (4) des erfindungsgemäßen Verfahrens durchgeführt, nämlich das Trennen der oberen Phase niedriger Dichte und der unteren Phase hoher Dichte.

Bevorzugt handelt es sich bei dem Trennen der Phasen gemäß Schritt (4) um ein Abtrennen der oberen Phase niedriger Dichte von der unteren Phase hoher Dichte unter Ausnutzung des Dichteunterschieds. Zu dem Zweck kann der Inhalt des Schmelzofens nach dem bekannten Dekantierungsprinzip beispielsweise sorgfältig ausgegossen werden, oder man sticht die oben befindliche Schlackephase oder die unten befindliche Metallphase ab. Die die geschmolzene Sammlerlegierung respektive das geschmolzene reine Silber aus der unteren Phase kann danach abkühlen und erstarren gelassen werden, beispielsweise innerhalb geeigneter Behältnisse.

Nach Abkühlen und Erstarren der Sammlerlegierung respektive des reinen Silbers kann das erstarrte Metall vereinnahmt werden. Insbesondere im Fall der Sammlerlegierung kann letztere dann einer weiteren konventionellen Raffination unterzogen werden, z.B. einer elektrometallurgischen und/oder hydrometallurgischen Raffination, um schließlich das oder die einzelnen Edelmetalle entweder als Metall oder als Edelmetallverbindung oder beispielsweise als Lösung derselben zu erhalten.

Das Trennen der Phasen gemäß Schritt (4) kann aber auch so erfolgen, dass der Ofeninhalt, d.h. die zwei- oder mehrphasige Schmelze, ohne Abtrennungsmaßnahmen zu treffen, ausgegossen und abkühlen und erstarren gelassen wird. Danach kann eine mechanische Trennung der erstarrten Phasen stattfinden, gefolgt von einer Vereinnahmung des erstarrten Metalls. Insbesondere im Fall der Sammlerlegierung kann letztere dann einer weiteren konventionellen Raffination unterzogen werden, z.B. einer elektrometallurgischen und/oder hydrometallurgischen Raffination, um schließlich das oder die einzelnen Edelmetalle entweder als Metall oder als Edelmetallverbindung oder beispielsweise als Lösung derselben zu erhalten.

### Beispiele

### Beispiel 1:

500 kg Edelmetallgekrätz mit der Zusammensetzung gemäß Tabelle 1 wurden mit 498 kg Calciumoxid und 316 kg Siliziumdioxid vorgemischt. Diese Mischung wurde bei 1500°C über einen Zeitraum von 5 Stunden in einen Schmelzofen gegeben und aufgeschmolzen. Anschließend wurden 40 kg Kupfermetall und 2 kg Koks zugegeben und die Schmelze für 60 Minuten bei dieser Temperatur gehalten. Es erfolgte ein Abguss der gebildeten heißen Schlacke und der ebenfalls gebildeten Sammlerlegierung in geeignete Behältnisse. Die chemische Zusammensetzung der Sammlerlegierung und der Schlacke ist in Tabelle 1 dargestellt.

**Tabelle 1**

| | Edelmetallgekrätz | Schlacke | Sammlerlegierung |
|---|---|---|---|
| Silber (Ag) | 3,0 Gew.-% | 0,02 Gew.-% | 22,1 Gew.-% |
| Gold (Au) | 1,6 Gew.-% | 0,008 Gew.-% | 11,8 Gew.-% |
| Platin (Pt) | 0,6 Gew.-% | 0,001 Gew.-% | 4,5 Gew.-% |
| Kupfer (Cu) | - | 0,19 Gew.-% | 56,2 Gew.-% |
| Eisen (Fe) | - | - | 5,4 Gew.-% |
| Aluminiumoxid | 45,3 Gew.-% | 17,6 Gew.-% | - |
| Calciumoxid | 5,7 Gew.-% | 40,9 Gew.-% | - |
| Siliziumdioxid | 37,2 Gew.-% | 39,1 Gew.-% | - |
| Titandioxid | 1,5 Gew.-% | 0,6 Gew.-% | - |
| Eisenoxid (Fe₂O₃) | 2,4 Gew.-% | 0,5 Gew.-% | - |
| Zirkoniumoxid (ZrO₂) | 2,7 Gew.-% | 1,1 Gew.-% | - |

### Beispiel 2:

225 kg Silbergekrätz mit der Zusammensetzung gemäß Tabelle 2 wurden mit 453 kg Calciumoxid und 465 kg Siliziumdioxid vorgemischt. Diese Mischung wurde bei 1500°C über einen Zeitraum von 4 Stunden in einen Schmelzofen gegeben und aufgeschmolzen. Anschließend wurden 10 kg Koks zugegeben und die Schmelze für 60 Minuten bei dieser Temperatur gehalten. Es erfolgte ein Abguss der gebildeten heißen Schlacke und des ebenfalls gebildeten Silbers in geeignete Behältnisse. Die chemische Zusammensetzung der Schlacke ist in Tabelle 2 dargestellt. Das Silber hatte eine Reinheit von 99,97 Gew.-%.

**Tabelle 2**

| | Silbergekrätz | Schlacke |
|---|---|---|
| Silber (Ag) | 24,0 Gew.-% | 0,1 Gew.-% |
| Aluminiumoxid | 76,0 Gew.-% | 15,6 Gew.-% |
| Calciumoxid | - | 41,6 Gew.-% |
| Siliziumdioxid | - | 42,7 Gew.-% |

## Patentansprüche

1. Verfahren zur Herstellung einer insgesamt 25 bis 100 Gew.-% Edelmetall umfassenden Sammlerlegierung umfassend 0 bis <97 Gew.-% des Edelmetalls Silber, 0 bis 75 Gew.-% mindestens eines Edelmetalls ausgewählt aus der Gruppe bestehend aus Gold, Platin, Rhodium und Palladium, sowie 0 bis 75 Gew.-% mindestens eines Nichtedelmetalls ausgewählt aus der Gruppe bestehend aus Kupfer, Eisen, Zinn und Nickel, umfassend die Schritte:
(1) Bereitstellen eines insgesamt 4 bis 30 Gew.-% Edelmetall umfassenden Edelmetallgekrätzes umfassend 0 bis 30 Gew.-% des Edelmetalls Silber, 0 bis 10 Gew.-% mindestens eines Edelmetalls ausgewählt aus der Gruppe bestehend aus Gold, Platin, Rhodium und Palladium, 0 bis 10 Gew.-% mindestens eines Nichtedelmetalls ausgewählt aus der Gruppe bestehend aus Kupfer, Eisen, Zinn und Nickel, und 70 bis 96 Gew.-% mindestens eines refraktären anorganischen Materials,
(2) Bereitstellen eines Flussmittels, welches beim gemeinsamen Schmelzen mit dem refraktären anorganischen Material aus dem in Schritt (1) bereitgestellten Edelmetallgekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag,
(3) gemeinsames Schmelzen der in den Schritten (1) und (2) bereitgestellten Materialien bei einer Temperatur im Bereich von 1300 bis 1600°C unter Bildung einer mindestens zwei übereinander angeordnete Phasen von unterschiedlicher Dichte umfassenden Schmelze, und
(4) Trennen der oberen Phase niedriger Dichte und der unteren Phase hoher Dichte,
wobei die obere Phase eine Schlackephase bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen und die untere Phase die Sammlerlegierung umfasst,
wobei keines der im Verfahren verwendeten Materialien Kupferoxid umfasst, ausgenommen gegebenenfalls als äußere Kupferoxidschicht auf metallischem Kupfer vorhandenes Kupferoxid.

2. Verfahren zur Herstellung von reinem Silber umfassend die Schritte:
(1) Bereitstellen eines aus 4 bis 30 Gew.-% Silber und 70 bis 96 Gew.-% mindestens eines refraktären anorganischen Materials bestehenden Silbergekrätzes,
(2) Bereitstellen eines Flussmittels, welches beim gemeinsamen Schmelzen mit dem refraktären anorganischen Material aus dem in Schritt (1) bereitgestellten Silbergekrätz eine geschmolzene Schlacke bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen zu bilden vermag,
(3) gemeinsames Schmelzen der in den Schritten (1) und (2) bereitgestellten Materialien bei einer Temperatur im Bereich von 1300 bis 1600°C unter Bildung einer mindestens zwei übereinander angeordnete Phasen von unterschiedlicher Dichte umfassenden Schmelze, und
(4) Trennen der oberen Phase niedriger Dichte und der unteren Phase hoher Dichte,
wobei die obere Phase eine Schlackephase bestehend aus >35 bis 45 Gew.-% Calciumoxid, 35 bis 45 Gew.-% Siliziumdioxid, 15 bis <20 Gew.-% Aluminiumoxid sowie 0 bis <15 Gew.-% einer oder mehrerer von Calciumoxid, Siliziumdioxid und Aluminiumoxid verschiedener refraktärer anorganischer Verbindungen und die untere Phase reines Silber umfasst,
wobei keines der im Verfahren verwendeten Materialien Kupferoxid umfasst.

3. Verfahren nach Anspruch 1, wobei das Edelmetallgekrätz 3,5 bis 29,5 Gew.-% des Edelmetalls Silber, 0,5 bis 10 Gew.-% mindestens eines Edelmetalls ausgewählt aus der Gruppe bestehend aus Gold, Platin, Rhodium und Palladium, 0 bis 10 Gew.-% mindestens eines Nichtedelmetalls ausgewählt aus der Gruppe bestehend aus Kupfer, Eisen, Zinn und Nickel, und 70 bis 96 Gew.-% mindestens eines refraktären anorganischen Materials umfasst.

4. Verfahren nach Anspruch 1, wobei das Edelmetallgekrätz und/oder das Flussmittel vor dem gemeinsamen Schmelzen in Schritt (3) zerkleinert werden.

5. Verfahren nach Anspruch 2, wobei das Silbergekrätz und/oder das Flussmittel vor dem gemeinsamen Schmelzen in Schritt (3) zerkleinert werden.

6. Verfahren nach einem der Ansprüche 1, 3 oder 4, wobei so gearbeitet wird, dass sich ein zu 100 Gewichtsteilen ergänzendes Verhältnis der oberen und unteren Phase im Bereich von 5 bis 60 Gewichtsteilen Sammlerlegierung : 40 bis 95 Gewichtsteilen Schlacke ausbildet.

7. Verfahren nach einem der Ansprüche 2 oder 5, wobei so gearbeitet wird, dass sich ein zu 100 Gewichtsteilen ergänzendes Verhältnis der oberen und unteren Phase im Bereich von 5 bis 60 Gewichtsteilen Silber: 40 bis 95 Gewichtsteilen Schlacke ausbildet.

8. Verfahren nach einem der vorhergehenden Ansprüche, wobei während Schritt (3) Reduktionsmittel zugeführt oder zugesetzt wird.

9. Verfahren nach einem der vorhergehenden Ansprüche, wobei der Schmelzvorgang in einem dreh- und/oder kippbaren Schmelzofen erfolgt.

10. Verfahren nach einem der vorhergehenden Ansprüche, wobei es sich bei Schritt (4) um ein Abtrennen besagter Phasen voneinander unter Ausnutzung des Dichteunterschieds handelt.

11. Verfahren nach einem der Ansprüche 1 bis 9, wobei Schritt (4) so erfolgt, dass die zwei- oder mehrphasige Schmelze, ohne Abtrennungsmaßnahmen zu treffen, ausgegossen und abkühlen und erstarren gelassen wird, gefolgt von einer mechanischen Trennung der erstarrten Phasen.
